# EUROPÄISCHE PATENTSCHRIFT

(11) **EP 2 510 570 B1**
(45) Veröffentlichungstag und Bekanntmachung des Hinweises auf die Patenterteilung: **09.01.2019**
(21) Anmeldenummer: 10784693.3
(22) Anmeldetag: 15.11.2010
(51) Int. Cl.: H01M 4/86, H01M 4/92, H01M 4/88, B22F 1/02, B22F 9/24, C22C 5/02, C22C 5/04, C22C 19/03, C23C 18/54, H01M 8/1018

(54) **VERFAHREN ZUR HERSTELLUNG EINES KATALYTISCHEN MATERIALS FÜR ELEKTRODEN EINER BRENNSTOFFZELLE**
METHOD FOR PRODUCING A CATALYTIC MATERIAL FOR ELECTRODES OF A FUEL CELL
PROCÉDÉ DE FABRICATION D'UN MATÉRIAU CATALYTIQUE POUR DES ÉLECTRODES D'UNE PILE À COMBUSTIBLE

(30) Priorität: 10.12.2009 DE 102009057797
(43) Veröffentlichungstag der Anmeldung: 17.10.2012
(73) Patentinhaber: Audi AG, 85045 Ingolstadt (DE)
(72) Erfinder: HERRMANN, Mirko, 38446 Wolfsburg (DE); SCHEFFLER, Rouven, 30177 Hannover (DE); MÄHR, Ulrich, 14052 Berlin (DE)
(86) Internationale Anmeldenummer: PCT/EP2010/006946
(87) Internationale Veröffentlichungsnummer: WO 2011/069593

(56) Entgegenhaltungen:
- EP-A2- 0 165 024
- WO-A1-97/37396
- WO-A1-2008/025750
- US-B1- 6 689 505
- ZAHNG J ET AL: "Platinum Monolayer on Nonnoble Metal-Noble Metal Core-Shell Nanoparticle Electrocatalysis for O2 Reduction", JOURNAL OF PHYSICAL CHEMISTRY. B (ONLINE), AMERICAN CHEMICAL SOCIETY, COLUMBUS, OH, US, Bd. 109, 11. November 2005 (2005-11-11), Seiten 22701-22704, XP002461601, ISSN: 1520-5207, DOI: DOI:10.1021/JP055634C -& ZHANG J ET AL: "Platinum Monolayer Electrocatalysts for O2 Reduction: Pt monolayer on Pd(111) and on Carbon-Supported Pd Nanoparticles", JOURNAL OF PHYSICAL CHEMISTRY. B (ONLINE), AMERICAN CHEMICAL SOCIETY, Bd. 108, 22. Juni 2004 (2004-06-22), Seiten 10955-10964, XP002624462,

## Beschreibung

Die Erfindung betrifft ein Verfahren zur Herstellung eines katalytischen Materials für Elektroden einer Brennstoffzelle, ein nach dem Verfahren hergestelltes katalytisches Material sowie eine Brennstoffzelle mit einem solchen katalytischen Material.
Brennstoffzellen nutzen die chemische Umsetzung von Wasserstoff und Sauerstoff zu Wasser, um elektrische Energie zu erzeugen. Hierfür enthalten Brennstoffzellen als Kernkomponente die so genannte Membran-Elektroden-Einheit (MEA für membrane electrode assembly), die ein Verbund aus einer protonenleitenden Membran und jeweils einer beidseitig an der Membran angeordneten Gasdiffusionselektrode (Anode und Kathode) ist. In der Regel wird die Brennstoffzelle durch eine Vielzahl, im Stapel (stack) angeordneter MEA gebildet, deren elektrische Leistungen sich addieren. Im Betrieb der Brennstoffzelle wird ein Brennstoff, insbesondere Wasserstoff H₂ oder ein wasserstoffhaltiges Gasgemisch, der Anode zugeführt, wo eine elektrochemische Oxidation von H₂ zu H⁺ unter Abgabe von Elektronen stattfindet. Über die Membran, welche die Reaktionsräume gasdicht voneinander trennt und elektrisch isoliert, erfolgt ein (wassergebundener oder wasserfreier) Transport der Protonen H⁺ aus dem Anodenraum in den Kathodenraum. Die an der Anode bereitgestellten Elektronen werden über eine elektrische Leitung der Kathode zugeleitet. Der Kathode wird Sauerstoff oder ein sauerstoffhaltiges Gasgemisch zugeführt, so dass eine Reduktion von O₂ zu O²⁻ unter Aufnahme der Elektronen stattfindet. Gleichzeitig regieren im Kathodenraum diese Sauerstoffanionen mit den über die Membran transportierten Protonen unter Bildung von Wasser. Durch die direkte Umsetzung von chemischer in elektrische Energie erzielen Brennstoffzellen gegenüber anderen Elektrizitätsgeneratoren aufgrund der Umgehung des Carnot-Faktors einen verbesserten Wirkungsgrad.
Die derzeit am weitesten entwickelte Brennstoffzellentechnologie basiert auf Polymerelektrolytmembranen (PEM), bei denen die Membran selbst aus einem Polymerelektrolyt besteht. Hierbei werden oft säuremodifizierte Polymere, insbesondere perfluorierte Polymere eingesetzt. Der verbreiteteste Vertreter dieser Klasse von Polymerelektrolyten ist eine Membran aus einem sulfonierten Polytetrafluorethylen-Copolymer (Handelsname: Nafion; Copolymer aus Tetra-fluorethylen und einem Sulfonylsäurefluorid-Derivat eines Perfluoralkylvinylethers). Die elektrolytische Leitung findet dabei über hydratisierte Protonen statt, weshalb für die Protonenleitfähigkeit das Vorhandensein von flüssigem Wasser Bedingung ist. Hieraus ergibt sich eine Reihe von Nachteilen. So ist im Betrieb der PEM-Brennstoffzelle ein Anfeuchten der Betriebsgase erforderlich, was einen hohen Systemaufwand bedeutet. Kommt es zu einem Ausfall des Befeuchtungssystems, sind Leistungsverluste und irreversible Schädigungen der Membran-Elektroden-Einheit die Folge. Ferner ist die maximale Betriebstemperatur dieser Brennstoffzellen - auch aufgrund der mangelnden thermischen Dauerstabilität der Membranen - bei Normdruck auf unter 100 °C beschränkt. Für den mobilen wie auch den stationären Einsatz sind jedoch Betriebstemperaturen oberhalb von 100 °C aus vielen Gründen erstrebenswert. So erhöht sich der Wärmeübergang mit steigender Differenz zur Umgebungstemperatur und ermöglicht eine bessere Kühlung des Brennstoffzellenstapels. Ferner nehmen die katalytische Aktivität der Elektroden sowie die Toleranz gegenüber Verunreinigungen der Brenngase mit steigender Temperatur zu. Gleichzeitig sinkt die Viskosität der elektrolytischen Substanzen mit zunehmender Temperatur und verbessert den Stofftransport zu den reaktiven Zentren der Elektroden. Schließlich fällt bei Temperaturen oberhalb von 100 °C das entstehende Produktwasser gasförmig an und kann besser aus der Reaktionszone abgeführt werden, so dass in der Gasdiffusionsschicht vorhandene Gastransportpfade (Poren und Maschen) freigehalten werden und auch ein Auswaschen der Elektrolyte und Elektrolytzusätze verhindert wird.

Zur Überwindung dieser Probleme sind Hochtemperatur-Polymerelektrolytmembran-Brennstoffzellen (HT-PEM-Brennstoffzellen) entwickelt worden, die bei Betriebstemperaturen von 120 bis 180 °C arbeiten und die keine oder nur geringe Befeuchtung erfordern. Die elektrolytische Leitfähigkeit der hier eingesetzten Membranen basiert auf flüssigen, durch elektrostatische Komplexbindung an das Polymergerüst gebundenen Elektrolyten, insbesondere Säuren oder Basen, die auch bei vollständiger Trockenheit der Membran oberhalb des Siedepunktes von Wasser die Protonenleitfähigkeit gewährleisten. Der vielversprechendste Ansatz verfolgt den Einsatz von säuredotierten basischen N-heterocyclischen Polymeren, insbesondere Polyazolen, wobei die Protonenleitung auf einer Säure beruht, die als Komplex im Polymer gebunden vorliegt. Beispielsweise sind Hochtemperaturmembranen aus Polybenzimidazol (PBI), die mit Säuren, wie etwa Phosphorsäure, Schwefelsäure oder anderen komplexiert sind, in US 5,525,436, US 5,716,727, US 5,599,639, WO 01/18894 A, WO 99/04445 A, EP 0 983 134 B und EP 0 954 544 B beschrieben.

Die Elektroden, insbesondere von HT-PEM-Brennstoffzellen, weisen üblicherweise jeweils eine, der Membran zugewandte Katalysatorschicht auf, die auf einem gasdurchlässigen Substrat, der so genannten Gasdiffusionsschicht (GDL für gas diffusion layer), zur homogenen Zufuhr der Reaktionsgase aufgebracht ist. Die Katalysatorschicht enthält ein elektrisch leitendes poröses Trägermaterial, beispielsweise Kohlenstoffpartikel, auf welchem die katalytisch wirksame Komponente geträgert vorliegt. Viele Edelmetallkatalysatoren wurden auf ihre Eignung in HT-PEM-Brennstoffzellen auf Basis von PBI/Phosphorsäure untersucht. Aufgrund der hohen Stabilität hat sich kommerziell praktisch ausschließlich Platin durchgesetzt. Daneben kann die Katalysatorschicht weitere Additive, beispielsweise polymere Bindemittel und/oder Komponenten zur Hydrophobizierung enthalten.

Der in der Brennstoffzellenreaktion stattfindende langsamste Schritt ist die kathodische Sauerstoffreduzierung (ORR für Oxygen Reduction Reaction), und innerhalb dieses Prozesses insbesondere die Adsorption der Sauerstoffanionen O²⁻ auf der Oberfläche der katalytischen Komponente. Ein vielversprechender Ansatz zur Steigerung der Adsorptionsgeschwindigkeit ist der Einsatz von Legierungskatalysatoren aus Platin und zumindest einem weiteren Übergangsmetall. Insbesondere kommen binäre Legierungen PtM (mit M = Co, Cu, Fe, Cr, Ru, Ir oder Au) oder ternäre Systeme PtXY (z.B. mit X = Co und Y = Ni, X = Cr und Y = Co oder X = Ru und Y = Ir) zum Einsatz. Die Einflüsse von Übergangsmetallen auf die Reaktionskinetik wurden beispielsweise von Zhang et al. ("Mixed-Metal Pt Monolayer Electrocatalysis for Enhanced Oxygen Reduction Kinetics", JACS 127 (2005), 12480-12481) untersucht. Zudem wirken sich die Übergangsmetalle auf die Stabilität, Aktivität und auf die Toleranz gegenüber Verunreinigungen aus. Stabilitätsuntersuchungen wurden etwa für Gold beschrieben (Zhang et al.: "Stabilization of Platinum Oxygen-Reduction Electrocatalysts Using Gold Clusters", Science 315 (2007), 220-222).

Nachteilig an diesem Ansatz ist, dass die katalytische Oberfläche des Platins teilweise durch Atome des Übergangsmetalls belegt wird und somit für die Reduzierung der Sauerstoffanionen nicht zur Verfügung steht, wodurch ein gewisser Leistungsverlust entsteht. Um diesem Problem zu begegnen, ist bekannt, die Platinlegierung einer Säure- oder Laugenwäsche zu unterziehen. Dabei wird das entsprechende Übergangsmetall aus der Oberfläche der Metalllegierung teilweise herausgelöst, während es im Inneren der Legierungspartikel vorhanden bleibt, um dort die Adsorption der O²⁻-Spezies zu beschleunigen. Dieser Vorgang führt jedoch auch dazu, dass es zu einer nachteiligen Zerstörung der Oberflächenstruktur der Platinpartikel und damit zu einer Leistungsverringerung der Brennstoffzelle und einem Stabilitätsverlust kommt.

Zudem ist ein Verfahren zur Herstellung eines katalytischen Materials für Brennstoffzellen bekannt (J. Zhang et al., "Platinum Monolayer on Nonnoble Metal-Nobel Metal Core-Shell Nanoparticle Electrocatalysts for O2 Reduction"; J. Phys. Chem. B Lett. Bd. 109 (2005), 22701-22704; J. Zhang et al., "Platinum Monolayer Electrocatalysts for O2 Reduction: Pt Monolayer on Pd(111) and on Carbon-supported Pd Nanoparticles"; J. Phys. Chem. B, Bd. 108 (2004),), das 10955-10964), das von einer Edelmetalllegierung ausgeht, welche Au, Pt oder Pd sowie Co oder Ni aufweist und auf Kohlenstoff geträgert vorliegt. Dabei erfolgt in einem ersten Verfahrensschritt eine thermische Behandlung, um eine Segregation des Edelmetalls und dem Übergangsmetall herbeizuführen, wobei eine Kern-Hüllenstruktur entsteht, in der die Übergangsmetalle den Kern bilden und das Edelmetall als eine mono- oder biatomare Schicht auf der Oberfläche der Partikel vorliegt. Sodann erfolgt eine galvanische Unterpotentialabscheidung (UPD) von Kupfer auf der Oberfläche der Partikel, das heißt auf der Hülle aus Edelmetallatomen. Schließlich erfolgt ein Austausch der auf der Oberfläche abgeschiedenen Kupferatome durch Platin aus einer Lösung eines Platinsalzes. Ergebnis dieses Verfahrens ist eine dreischichtige Struktur, die einen Kern eines Übergangsmetalls, eine darauf befindliche Hüllschicht eines ersten Edelmetalls sowie eine äußere Hüllschicht eines zweiten Edelmetalls

WO2008/025750 offenbart Kern-Hülle Brennstoffzellenkatalysatoren, wobei die Hülle ein Edelmetall enthält.

Aufgabe der vorliegenden Erfindung ist es daher, einen Katalysator für Brennstoffzellen mit einer verbesserten Leistungsdichte zur Verfügung zu stellen sowie ein Verfahren für seine Herstellung.
Diese Aufgaben werden durch ein Verfahren zur Herstellung eines katalytischen Materials für Elektroden einer Brennstoffzelle gemäß Anspruch 1, ein mit diesem Verfahren hergestelltes katalytisches Material für Elektroden einer Brennstoffzelle gemäß Anspruch 7 sowie eine Brennstoffzelle mit den Merkmalen des Anspruches 7 gelöst. Vorteilhafte Ausgestaltungen der Erfindung sind Gegenstand der abhängigen Ansprüche.

Gemäß dem erfindungsgemäßen Verfahren wird eine auf einem elektrisch leitfähigen, kohlenstoffhaltigen Trägermaterial haftende Edelmetalllegierung, die zumindest ein Metall der Platin- und/oder Goldgruppe und zumindest ein weiteres Übergangsmaterial umfasst, mit einer Lösung eines Salzes oder einer Säure eines Edelmetalls in Kontakt gebracht. Dabei weist das gelöste Edelmetall in der vorliegenden Lösung ein höheres positives elektrochemisches Potenzial auf, als das zumindest eine weitere Übergangsmetall der Edelmetalllegierung, ist also "edler" als das Übergangsmetall der Edelmetalllegierung. Infolgedessen kommt es auf einer Oberfläche der Edelmetalllegierung zu einem elektrochemischen Austausch zumindest eines Teils des zumindest einen Übergangsmetalls gegen Atome des Edelmetalls. Aufgrund des höheren elektrochemischen Potentials fungiert somit das Edelmetallanion der Lösung als Oxidationsmittel für das unedlere metallisch vorliegende Übergangsmetall (Oxidationsstufe 0) der Edelmetalllegierung, wobei das Übergangsmetall Elektronen an das Edelmetall abgibt und in Lösung geht, während das Edelmetall reduziert wird und sich mit in metallischer Form (Oxidationsstufe 0) auf der Oberfläche der Edelmetalllegierung abscheidet.

Das Resultat des oben beschriebenen erfindungsgemäßen Vorgangs ist eine kohlenstoffgeträgerte Edelmetalllegierung, bei der die Konzentration des zumindest einen Metalls der Platin- und/oder Goldgruppe auf ihrer Oberfläche höher ist als in ihrem Inneren. Dieses katalytische Material, das einen weiteren Aspekt der Erfindung darstellt, zeichnet sich durch eine unzerstörte Oberfläche der Legierung aus und besitzt aufgrund der hohen Oberflächenkonzentration des Platin- oder Goldgruppenmetalls eine hohe katalytische Leistungsfähigkeit. Dennoch ist aufgrund des vorwiegend im Inneren der Edelmetalllegierungspartikel vorhandenen Übergangsmetalls eine beschleunigte Adsorption der Sauerstoffionen O²⁻ während des Brennstoffzellenprozesses zu beobachten.

In einer bevorzugten Ausführung des Verfahrens ist das zumindest eine Metall der Platin- und/oder Goldgruppe der Edelmetalllegierung ein Element der Gruppe Ru, Rh, Pd, Os, Ir, Pt, Au und/oder Ag. Insbesondere ist es gewählt aus der Gruppe Pt, Pd, Au, Ag, Ir und Ru, wobei besonders bevorzugt Platin Pt eingesetzt wird, da dieses die höchste Stabilität und katalytische Aktivität der Brennstoffzellenreaktion aufweist.

Das zumindest eine Übergangsmetallelement der Edelmetalllegierung ist in vorteilhafter Ausführung der Erfindung ein Element der ersten, fünften, sechsten, siebten oder achten Nebengruppe des Periodensystems der Elemente (PSE). Mit Vorzug ist es gewählt aus der Gruppe Fe, Co, Ni, Cr, Cu, Ir und Ru. Diese Übergangsmetalle führen zu einer besonders schnellen Adsorption von Sauerstoffanionen an den Katalysator.

Bevorzugte Edelmetalllegierungen stellen beispielsweise binäre Legierungen der Zusammensetzung PtM dar, wobei M ein Element der Gruppe Co, Cu, Fe, Cr, Ir oder Ru sein kann. Alternativ kann die Edelmetalllegierung eine ternäre Legierung der Zusammensetzung PtXY sein, wobei X und Y ungleich gewählt sind und jeweils ein Element der Gruppe Co, Ni, Cu, Fe, Cr, Ir und Ru sind.

Das Edelmetall, das in Form eines Salzes oder einer Säure in der Lösung eingesetzt wird, kann aus den gleichen Elementen wie das Metall der Platin- oder Goldgruppe der Edelmetalllegierung gewählt werden. Dabei kann es mit diesem identisch sein oder unterschiedlich zu diesem gewählt werden.

Als kohlenstoffhaltiges Trägermaterial wird vorzugsweise Graphit oder eine Modifikation von diesem eingesetzt. Beispielsweise kann ein unter dem geschützten Handelsnamen Vulcan XC-72 bekanntes Produkt als kohlenstoffhaltiges Trägermaterial Einsatz finden. Strukturell liegt der Kohlenstoffträger vorzugsweise in Form von Partikeln mit Partikeldurchmessern im Bereich von 20 bis 500 nm vor.

Nach der erfindungsgemäßen Wäsche des katalytischen Materials mit dem Edelmetallsalz beziehungsweise der Edelmetallsäure wird das so behandelte Material mit Wasser oder einem organischen Lösungsmittel gewaschen, um die Salz- beziehungsweise Säurereste sowie das herausgelöste Übergangsmetall zu entfernen. Anschließend wird das Material getrocknet.

Üblicherweise wird das katalytische Material auf eine Gasdiffusionsschicht aufgebracht, die der gleichmäßigen Verteilung der Reaktionsgase dient und üblicherweise aus einem kohlenstoffbasierten Gewebe besteht. Ein solches Gefüge aus Gasdiffusionsschicht (GDL) und einer aufgebrachten Schicht des katalytischen Materials wird auch als Gasdiffusionselektrode bezeichnet.

Ein weiterer Aspekt der vorliegenden Erfindung betrifft eine Brennstoffzelle mit zumindest einer Membran-Elektroden-Einheit aufweisenden Einzelzelle, die eine zwischen zwei Elektroden sandwichartig angeordnete Polymerelektrolytmembran enthält, wobei die Elektroden ein katalytisches Material gemäß der vorliegenden Erfindung aufweisen. Vorzugsweise handelt es sich bei der Brennstoffzelle um eine Hochtemperatur-Polymerelektrolytmembran-Brennstoffzelle, deren Protonenleitung über einen an der Polymerelektrolytmembran komplexiert vorliegenden Elektrolyten realisiert ist. Insbesondere kann hier eine mit Phosphorsäure H₃PO₄ behandelte Membran aus Polybenzimidazol PBI eingesetzt werden.

Durch die erfindungsgemäße "Edelmetallwäsche" werden auf der Oberfläche der Edelmetalllegierung gezielt Metalle, nämlich die des zumindest einen weiteren Übergangsmetalls, ausgetauscht, um die Reaktionskinetik für die ORR zu beeinflussen. Es werden unedle Metalle (die Übergangsmetalle) auf der Oberfläche der Legierungspartikel durch edlere Übergangsmetalle ersetzt und im Gegensatz zum Stand der Technik nicht nur herausgelöst. Somit bleibt die sensible Oberflächenstruktur für die Reaktion erhalten und wird nicht durch Fehlstellen von den herausgelösten Übergangsmetallen zerstört.

Die Erfindung wird nachfolgend in Ausführungsbeispielen anhand der dazugehörigen Abbildungen näher erläutert. Es zeigen:
- Figur 1A: eine stark schematisierte Brennstoffzelle;
- Figur 1B: einen Ausschnitt aus Figur 1A mit einer Membran-Elektroden-Einheit;
- Figur 1C: eine detailliertere Darstellung einer Membran-Elektroden-Einheit gemäß der vorliegenden Erfindung; und
- Figur 2: den Leistungsverlauf einer Membran-Elektroden-Einheit mit Gasdiffusionselektroden, die ein erfindungsgemäßes katalytisches Material (PtNiCo-Pt) enthalten.

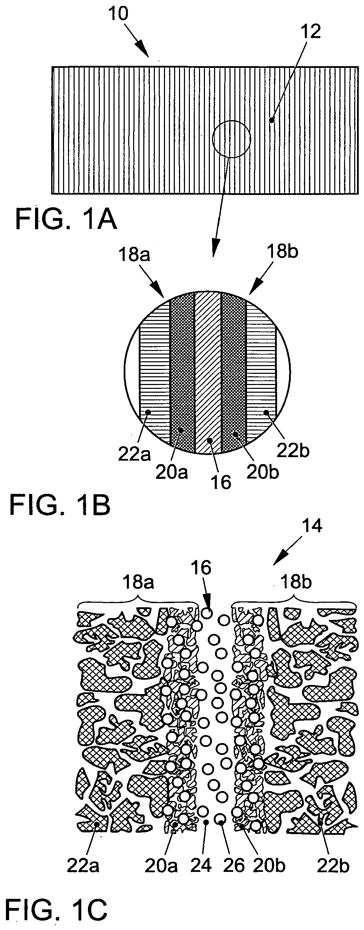

Figur 1A zeigt in einer stark schematisierten Darstellung eine Brennstoffzelle 10 mit einem Brennstoffzellenstapel, der aus einer Vielzahl von Einzelzellen 12 besteht, von denen jede eine Membran-Elektroden-Einheiten 14 (MEA) aufweist. Eine solche ist in Figur 1B in einer vergrößerten Schnittansicht gezeigt. Eine etwas detailliertere Darstellung eines Ausschnitts der Membran-Elektroden-Einheit 14 zeigt Figur 1C ebenfalls in Schnittansicht.

Wie aus den Figuren 1B und 1C ersichtlich ist, umfasst die MEA 14 eine protonenleitende (im Wesentlichen wasserfreie) Polymerelektrolytmembran 16, die aus einem geeigneten Polymermaterial 24 gebildet und mit zumindest einem Elektrolyten 26 imprägniert ist. Beispielsweise kann das Polymermaterial ein Polymer aus der Gruppe der Polyazole und Polyphosphazene sein. Insbesondere sind hier Polybenzimidazole, Polypyridine, Polypyrimidine, Polyimidazole, Polybenzthiazole, Polybenzoxazole, Polyoxadiazole, Polychinoxaline, Polythiadiazole, Poly(tetrazapyrene), Polyvinylpyridine, Polyvinylimidazole zu nennen.

Die wasserfreie Protonenleitung der Polymermembran 16 beziehungsweise des Polymermaterials 24 basiert auf dem Elektrolyten 26, der insbesondere eine Lösung eines hochsiedenden temperaturbeständigen Elektrolyten ist. Vorzugsweise handelt es sich um eine Säure, wie Phosphorsäure, Phosphinsäure, Phosphonsäure, Salpetersäure, Salzsäure, Ameisensäure, Essigsäure, Trifluoressigsäure, Schwefelsäure, Sulfonsäure, eine insbesondere (per)halogenierte Alkyl- oder Arylsulfonsäure oder (per)halogenierte Alkyl- oder Arylphosphonsäure, insbesondere Methansulfonsäure oder Phenylsulfonsäure. Ebenso kommen Phosphorsäurealkyl- oder -arylester, Heteropolysäuren, wie Hexafluorglutarsäure (HFGA) oder Squarsäure (SA), in Frage. Alternativ kann der Elektrolyt 26 eine Base sein, insbesondere ein Alkali- oder Erdalkalihydroxid, wie Kaliumhydroxid, Natriumhydroxid oder Lithiumhydroxid. Auch Polysiloxane oder stickstoffhaltige Heterocyclen können als Elektrolyt 26 oder Elektrolytzusatz eingesetzt werden, beispielsweise Imide, Imidazole, Triazole und Derivate von diesen, insbesondere Perfluorsulfonimide. Ebenfalls kommen ionische Flüssigkeiten, wie 1-Butyl-3-methyl-imidazoliumtrifluormethansulfonit, als Elektrolyt in Frage. Alle vorgenannten Elektrolyte können auch als Derivat oder Salze eingesetzt werden. Auch ist denkbar, eine Mischung verschiedener der vorgenannten Elektrolyte zur Imprägnierung des Polymermaterials 24 einzusetzen.

Bevorzugt werden Protonenaustauschermembranen eingesetzt, die durch Imprägnierung eines temperaturbeständigen basischen Polymers mit einer Säure gebildet werden. Im vorliegenden Beispiel wird eine Membran aus Polybenzimidazol (PBI) als wasserfreies Polymermaterial 24 verwendet, an der Phosphorsäure als Elektrolyt 26 gebunden vorliegt.

An den beiden äußeren Membranflächen schließt jeweils eine Gasdiffusionselektrode 18a und 18b an, nämlich eine als Kathode geschaltete Elektrode 18a auf Kathodenseite der Membran 16 und eine als Anode geschaltete Elektrode 18b auf Anodenseite. Die Gasdiffusionselektroden 18a und 18b umfassen jeweils eine mikroporöse Katalysatorschicht 20a und 20b, welche die Polymerelektrolytmembran 16 beidseitig kontaktieren. Die Katalysatorschichten 20a, 20b enthalten als eigentlich reaktive Zentren der Elektroden ein katalytisches Material gemäß vorliegender Erfindung, bei dem es sich um eine binäre, ternäre oder höhere Edelmetalllegierung als katalytisch wirksame Substanz handelt. Diese umfasst zumindest ein Element der Platin- und/oder Goldgruppe, insbesondere wie Platin, Iridium oder Ruthenium, Palladium, Gold und/oder Silber, und zumindest ein weiteres Übergangsmetall, wie Chrom, Cobalt, Nickel, Eisen, Kupfer, Iridium und/oder Ruthenium. Bevorzugt liegt die katalytische Substanz auf einem porösen, elektrisch leitenden Trägermaterial fixiert vor. Für das Trägermaterial kommen gasdurchlässige elektrisch leitfähige Kohlenstoffmaterialien, wie etwa gasdurchlässige Partikel, Gewebe und Filze auf Kohlenstoffbasis in Frage. Über das Trägermaterial der Katalysatorschichten 20a und 20b ist eine elektrisch leitfähige Anbindung der Reaktionszentren der Elektroden mit einem äußeren Stromkreis (nicht dargestellt) realisiert.

Die Gasdiffusionselektroden 18a und 18b umfassen zudem jeweils eine Gasdiffusionsschicht (GDL für gas diffusion layer) 22a und 22b, die an den jeweils äußeren, von der Polymerelektrolytmembran 16 abgewandten Flächen der Katalysatorschicht 20a beziehungsweise 20b anschließen. Funktion der GDL 22a, 22b ist es, eine gleichmäßige Anströmung der Katalysatorschichten 20a, 20b mit den Reaktionsgasen Sauerstoff beziehungsweise Luft auf der Kathodenseite und Wasserstoff auf der Anodenseite zu gewährleisten. Ferner kann die GDL 18a, 18b angrenzend an die Katalysatorschicht 20a, 20b noch eine dünne mikroporöse Schicht aufweisen, beispielsweise auf Kohlenstoffbasis (nicht dargestellt). Nicht dargestellt in den Figuren 1B und 1C sind zudem so genannte Bipolarplatten (BP), die beidseitig an den MEA-Verbund anschließen und für die Zuleitung der Prozessgase sowie die Ableitung des Produktwassers sorgen und zudem die einzelnen MEA 14 im Brennstoffzellenstapel 12 gasdicht voneinander trennen.

Die Herstellung des katalytischen Materials für die Katalysatorschichten 20A und 20B erfolgt erfindungsgemäß dadurch, dass die kohlenstoffgeträgerte Edelmetalllegierung einer Wäsche mit einer Lösung eines Edelmetallsalzes oder Edelmetallsäure unterzogen wird. Wichtig bei der Auswahl des Edelmetalls der Waschlösung ist dabei, dass dieses ein höheres positives elektrochemisches Potential aufweist, als das aus der Oberfläche der Edelmetalllegierung zu entfernenden Übergangsmetalls. Dabei kann das Edelmetall der Waschlösung grundsätzlich aus dem gleichen Metall der Platin- oder Goldgruppe der katalytischen Edelmetalllegierung gewählt werden, beispielsweise Platin. Ausführungsbeispiele für die Herstellung des erfindungsgemäßen katalytischen Materials werden nachfolgend beschrieben.

Dabei wird grundsätzlich das entsprechende Edelmetallsalz oder die Edelmetallsäure in einem geeigneten Gefäß in destilliertem Wasser gelöst. Beispielsweise wird hierbei ein Edelmetallgehalt von 1 bis 10 mmol, insbesondere von 2 bis 3 mmol in 100 ml H₂O eingestellt. Zu dieser Lösung werden beispielsweise 4 g der kohlenstoffgeträgerten Edelmetalllegierung zugegeben und für 90 Minuten gerührt. Anschließend wird die Lösung mit weiteren 100 ml H₂O verdünnt und für weitere 12 bis 20 Stunden gerührt. Das so behandelte Produkt wird mehrfach mit destilliertem Wasser gewaschen, filtriert und beispielsweise über Silika-Trockenperlen getrocknet.

Der fertige Katalysator kann dann mit einem Porenbildner in einer organischen Flüssigkeit, beispielsweise N,N-Dimethylacetamid zu einer Paste verarbeitet werden und mit einem Ziehrakel auf eine Gasdiffusionsschicht aufgetragen werden. Die beschichtete GDL wird in einem Vakuumofen bei 150 °C und einem Druck von 300 mbar 16 Stunden lang getrocknet. Nach der Trocknung ist die beschichtete GDL eine einsatzbereite Elektrode für die HT-Brennstoffzelle.

Besonders bevorzugte Edelmetalllegierungen sowie ihre molaren beziehungsweise atomaren Zusammensetzungen sind in Tabelle 1 aufgeführt.

**Tabelle 1:**

| **Legierungskatalysatoren** | |
|---|---|
| Pt-Ni-Co | 3 : 0,5 : 0,5 |
| | 3 : 3 : 1 |
| | 3 : 6 : 3 |
| | 2 : 1 : 1 |
| Pt-Ir | 3 : 1 |
| | 2 : 1 |
| Pt-Ru | 3: 1 |
| | 2 : 1 |
| Pt-Ru-Ir | 3 : 0,5 : 0,5 |
| Pt-Co | 3 : 1 |
| | 1 : 1 |

Bevorzugte Salz- oder Säureverbindungen von Edelmetallen, die für die Lösung der Edelmetallwäsche eingesetzt werden können, sind in Tabelle 2 aufgeführt.

**Tabelle 2:**

| **Salze/Säuren** | **Formel** |
|---|---|
| Iridiumchlorid-hydrat | IrCl₂·H₂O |
| Rutheniumchlorid | RuCl₃ |
| Palladiumnitrat | PdNO₃ |
| Hexachloropalladiumsäure | H₂PdCl₆·xH₂O |
| Platinnitrat | PtNO₃ |
| Tetrachloroplatinsäure | H₂PtCl₄·xH₂O |
| Hexachloroplatinsäure | H₂PtCl₆·xH₂O |
| Goldchlorid | AuCl₃ |
| Hexachlorogoldsäure | HAuCl₄·xH₂O |
| Silbernitrat | AgNO₃ |

Beispiele für die Herstellung des erfindungsgemäßen katalytischen Materials für die Gasdiffusionselektroden 18a und 18b werden nachfolgend beschrieben.

### Beispiel 1

In einem Becherglas wird 1,158 g H₂PtCl₆·(H₂O)ₓ in 100 ml H₂O aufgelöst. Zu der Lösung wird 4 g Legierungskatalysator zugegeben und 90 gerührt. Anschließend wird die Lösung mit zusätzlichen 100 ml verdünnt und 12 bis 20 stunden lang gerührt. Das Produkt wird mit destilliertem Wasser mehrfach gewaschen, filtriert, getrocknet und anschließend zu Elektroden weiterverarbeitet.

### Beispiel 2

In einem Becherglas wird 1,03 g HAuCl₄·(H₂O)ₓ in 100 ml H₂O aufgelöst. Zu der Lösung wird 4 g Legierungskatalysator zugegeben und 90 min gerührt. Anschließend wird die Lösung mit zusätzlichen 100 ml verdünnt und 12 bis 20 Stunden lang gerührt. Das Produkt wird mit destilliertem Wasser mehrfach gewaschen, filtriert, getrocknet und anschließend zu Elektroden weiterverarbeitet.

### Beispiel 3

In einem Becherglas wird 0,58 g RuCl₃ in 100 ml H₂O aufgelöst. Zu der Lösung wird 4 g Legierungskatalysator zugegeben und 90 min lang gerührt. Anschließend wird die Lösung mit zusätzlichen 100 ml verdünnt und 12 bis 20 Stunden lang gerührt. Das Produkt wird mit destilliertem Wasser mehrfach gewaschen, filtriert, getrocknet und anschließend zu Elektroden weiterverarbeitet.

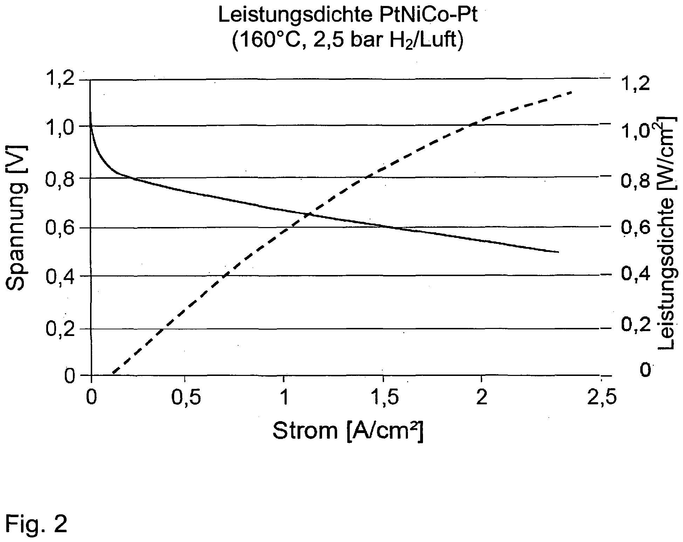

Figur 2 zeigt die Leistungscharakteristik des nach Beispiel 1 hergestellten Katalysators PtNiCo (3 : 0,5 : 0,5), der mit Hexachloroplatinsäure H₂PtCl₆ behandelt wurde. Eine Membran-Elektroden-Einheit gemäß Figur 1, die diesen Katalysator enthielt, zeigte bei 0,6 V eine Leistungsdichte von bis zu 0,87 W/cm².

### Bezugszeichenliste

- 10: Brennstoffzelle
- 12: Einzelzelle
- 14: Membran-Elektroden-Einheit (MEA)
- 16: Polymerelektrolytmembran
- 18a: erste Gasdiffusionselektrode (Kathode)
- 18b: zweite Gasdiffusionselektrode (Anode)
- 20a: kathodenseitige Katalysatorschicht
- 20b: anodenseitige Katalysatorschicht
- 22a: kathodenseitige Gasdiffusionsschicht (GDL)
- 22b: anodenseitige Gasdiffusionsschicht (GDL)
- 24: Polymermaterial
- 26: Elektrolyt

## Patentansprüche

1. Verfahren zur Herstellung eines katalytischen Materials für Elektroden einer Brennstoffzelle, wobei eine auf einem elektrisch leitfähigen, kohlenstoffhaltigen Trägermaterial haftende Edelmetalllegierung, die zumindest ein Metall der Platin- und/oder Goldgruppe und zumindest ein weiteres Übergangsmetall umfasst, mit einer Lösung eines Salzes oder einer Säure eines Edelmetalls, welches in der vorliegenden Lösung ein höheres positives elektrochemisches Potential aufweist als das zumindest eine weitere Übergangsmetall der Edelmetalllegierung, in Kontakt gebracht wird, so dass auf einer Oberfläche der Edelmetalllegierung zumindest ein Teil des zumindest einen Übergangsmetalls elektrochemisch gegen Atome des Edelmetalls ausgetauscht wird.

2. Verfahren nach Anspruch 1, wobei das zumindest eine Metall der Platin- oder Goldgruppe und/oder das Edelmetall unabhängig voneinander ein Element ist der Gruppe Ru, Rh, Pd, Os, Ir, Pt, Au, Ag, insbesondere der Gruppe Pt, Pd, Au, Ag, Ir, Ru, vorzugsweise Pt.

3. Verfahren nach einem der Ansprüche 1 oder 2, wobei das zumindest eine weitere Übergangsmetall ein Element ist der I., V., VI. VII. und/oder VIII. Nebengruppe des PSE, insbesondere ein Element der Gruppe Fe, Co, Ni, Cr, Cu, Ir, Ru.

4. Verfahren nach einem der Ansprüche 1 bis 3, wobei die Edelmetalllegierung eine binäre Legierung der Zusammensetzung PtM ist, mit M = Co, Cu, Fe, Cr, Ir oder Ru.

5. Verfahren nach einem der Ansprüche 1 bis 3, wobei die Edelmetalllegierung eine ternäre Legierung der Zusammensetzung PtXY ist, mit X ≠ Y = Co, Ni, Cu, Fe, Cr, Ir oder Ru.

6. Verfahren nach einem der vorhergehenden Ansprüche, wobei das kohlenstoffhaltige Trägermaterial Graphit oder eine Modifikation von Graphit ist.

7. Katalytisches Material für Elektroden einer Brennstoffzelle, hergestellt mit einem Verfahren nach einem der Ansprüche 1 bis 6, umfassend ein elektrisch leitfähiges, kohlenstoffhaltiges Trägermaterial sowie eine auf dem Trägermaterial haftende Edelmetalllegierung, die zumindest ein Metall der Platin- und/oder Goldgruppe und zumindest ein weiteres Übergangsmetall umfasst, wobei eine Konzentration des zumindest einen Metalls der Platin- und/oder Goldgruppe auf einer Oberfläche der Edelmetalllegierung höher ist als in einem Inneren derselben.

8. Brennstoffzelle (10) mit zumindest einer, eine Membran-Elektroden-Einheit (14) aufweisenden Einzelzelle (12), die eine zwischen zwei Elektroden (18a, 18b) sandwichartig angeordnete Polymerelektrolytmembran (16) enthält, wobei die Elektroden (18a, 18b) ein katalytisches Material nach Anspruch 7 aufweisen.

## Claims

1. Method for producing a catalytic material for electrodes of a fuel cell, wherein a noble metal alloy containing at least one metal of the platinum and/or gold group and at least one further transition metal and adhering to an electrically conductive substrate material containing carbon is brought in contact with a solution of a salt or an acid of a noble metal, which in the present solution has a higher positive electrochemical potential than the at least one further transition metal of the noble metal alloy, so that at least part of the at least one transition metal is electrochemically exchanged for atoms of the noble metal on a surface of the noble metal alloy.

2. Method according to claim 1, wherein the at least one metal of the platinum or gold group and/or the noble metal, independently of each other, is an element of the Ru, Rh, Pd, Os, Ir, Pt, Au, Ag group in particular of the Pt, Pd, Au, Ag, Ir, Ru group, preferably Pt.

3. Method according to claim 1 or 2, wherein the at least one further transition metal is an element from the first, fifth, sixth, seventh, and/or eighth secondary group of the periodic table, in particular an element from the Fe, Co, Ni, Cr, Cu, Ir, Ru group.

4. Method according to any one of claims 1 to 3, wherein the noble metal alloy is a binary alloy of the compound PtM, where M = Co, Cu, Fe, Cr, Ir or Ru.

5. Method according to any one of claims 1 to 3, wherein the noble metal alloy is a ternary alloy of the compound PtXY, where X ≠Y = Co, Ni, Cu, Fe, Cr, Ir or Ru.

6. Method according to any one of the preceding claims, wherein the substrate material containing carbon is graphite or a modification of graphite.

7. Catalytic material for electrodes of a fuel cell produced using a method according to any one of claims 1 to 6, comprising an electrically conductive substrate material containing carbon as well as a noble metal alloy containing at least one metal of the platinum and/or gold group and at least one further transition metal and adhering to the substrate material, wherein a concentration of the at least one metal of the platinum and/or gold group on a surface of the noble metal alloy is higher than inside the same.

8. Fuel cell (10) with at least one single cell (12) containing a polymer electrolyte membrane (16) arranged in a sandwich-like manner between two electrodes (18a, 18b) and having a membrane electrode unit (14), wherein the electrodes (18a, 18b) have a catalytic material according to claim 7.

## Revendications

1. Procédé servant à fabriquer un matériau catalytique pour des électrodes d'une pile à combustible, dans lequel un alliage de métaux précieux adhérant sur un matériau de support électroconducteur, contenant du carbone, qui comprend au moins un métal du groupe platine et/ou or et au moins un autre métal de transition, est mis en contact avec une solution d'un sel ou d'un acide d'un métal précieux, qui présente dans la solution présente un potentiel électrochimique positif plus élevé que l'au moins un autre métal de transition de l'alliage de métaux précieux de sorte qu'au moins une partie de l'au moins un métal de transition est remplacée de manière électrochimique par des atomes du métal précieux sur une surface de l'alliage de métaux précieux.

2. Procédé selon la revendication 1, dans lequel au moins un métal du groupe platine ou or et/ou le métal précieux sont indépendamment l'un de l'autre un élément du groupe Ru, Rh, Pd, Os, Ir, Pt, Au, Ag, en particulier du groupe Pt, Pd, Au, Ag, Ir, Ru, de préférence Pt.

3. Procédé selon l'une quelconque des revendications 1 ou 2, dans lequel l'au moins un autre métal de transition est un élément du groupe secondaire I, V, VI, VII et/ou VIII du PSE, en particulier un élément du groupe Fe, Co, Ni, Cr, Cu, Ir, Ru.

4. Procédé selon l'une quelconque des revendications 1 à 3, dans lequel l'alliage de métaux précieux est un alliage binaire de la composition PtM, avec M = Co, Cu, Fe, Cr, Ir ou Ru.

5. Procédé selon l'une quelconque des revendications 1 à 3, dans lequel l'alliage de métaux précieux est un alliage ternaire de la composition PtXY, avec X ≠ Y = Co, Ni, Cu, Fe, Cr, Ir ou Ru.

6. Procédé selon l'une quelconque des revendications précédentes, dans lequel le matériau de support contenant du carbone est du graphite ou une modification du graphite.

7. Matériau catalytique pour des électrodes d'une pile à combustible, fabriqué avec un procédé selon l'une quelconque des revendications 1 à 6, comprenant un matériau de support électroconducteur, contenant du carbone, ainsi qu'un alliage de métaux précieux adhérant sur le matériau de support, qui comprend au moins un métal du groupe de platine et/ou or et au moins un autre métal de transition, dans lequel une concentration de l'au moins un métal du groupe platine et/ou or sur une surface de l'alliage de métaux précieux est plus élevée qu'à l'intérieur de celui-ci.

8. Pile à combustible (10) avec au moins une cellule individuelle (12) présentant une unité membrane-électrodes (14), qui contient une membrane à électrolyte polymère (16) disposée entre deux électrodes (18a, 18b) à la manière d'un sandwich, dans laquelle les électrodes (18a, 18b) présentent un matériau catalytique selon la revendication 7.
